# EUROPÄISCHE PATENTSCHRIFT

(11) **EP 1 409 926 B1**
(45) Veröffentlichungstag und Bekanntmachung des Hinweises auf die Patenterteilung: **03.11.2004**
(21) Anmeldenummer: 00956359.4
(22) Anmeldetag: 31.07.2000
(51) Int. Cl.: F23R 3/00, F01D 5/18, F01D 25/12

(54) **PRALLKÜHLVORRICHTUNG**
BAFFLE COOLING DEVICE
DISPOSITIF DE REFROIDISSEMENT PAR CHOC

(30) Priorität: 03.08.1999 EP 99115330
(43) Veröffentlichungstag der Anmeldung: 21.04.2004
(73) Patentinhaber: SIEMENS AKTIENGESELLSCHAFT, 80333 München (DE)
(72) Erfinder: TIEMANN, Peter, D-58452 Witten (DE)
(86) Internationale Anmeldenummer: PCT/EP2000/007387
(87) Internationale Veröffentlichungsnummer: WO 2001/009553

(56) Entgegenhaltungen:
- EP-A- 0 624 757
- EP-A- 0 690 205
- EP-A- 0 905 353
- US-A- 5 467 815

## Beschreibung

Die Erfindung betrifft eine Einrichtung für ein zu kühlendes Bauteil, vor dem ein mit einem Kühlmittel beaufschlagbares Prallkühlblech mit einer Kühlmitteldurchführung angeordnet ist. Zwischen dem Prallkühlblech und dem zu kühlenden Bauteil ist neben der Kühlmitteldurchführung ein Ableitkanal für das Kühlmittel vorgesehen.

In einer thermischen Maschine, beispielsweise in einer Gasoder Dampfturbine, werden durch ein heißes Medium, z. B. ein heißes Gas oder Dampf, die einen Raum begrenzenden Oberflächen thermisch stark belastet. Im Hinblick auf die Erhöhung des Wirkungsgrades der thermischen Maschine wird unter anderem versucht, eine möglichst hohe Temperatur des heißen Mediums zu erzielen. Es ist daher einerseits von großer Bedeutung, geeignete Werkstoffe für die mit dem heißen Medium beaufschlagten Oberflächen zu finden, besonders Materialien mit ausreichender Festigkeit bei möglichst hohen Temperaturen. Andererseits kommt es darauf an, diese Oberflächen effizient zu kühlen, um hohe Temperaturen anwenden zu können. In einer Gasturbine wird das zur Kühlung erforderliche Kühlmittel üblicherweise einem an die Turbine angekoppelten Verdichter als Kühlluft entnommen. Um den mit dieser Kühlluftentnahme einhergehenden Wirkungsgradverlust so gering wie möglich zu halten, wird intensiv nach Kühlkonzepten gesucht, die einen möglichst effizienten Kühlmitteleinsatz gewährleisten.

In der DE 26 28 807 A1 ist ein Prallkühlsystem für eine Turbinenlaufschaufel beschrieben. Die Turbinenlaufschaufel umfaßt einen Schaufelfuß zur Befestigung an einem Rotor der Turbine, ein Schaufelblatt zur Umstromung durch ein Arbeitsmedium und eine Plattform zum Begrenzen eines Kanals für das Arbeitsmedium. Bei einer Gasturbine treten in dem Kanal sehr hohe Temperaturen aus, so daß die dem heißer Arbeitsmedium ausgesetzte Oberfläche der Plattform thermisch stark belastet ist. Zur Kühlung der Plattform ist daher vor der dem heißen Arbeitsmedium abgewandten Seite ein gelochtes Wandelement angeordnet, das als Prallkühlblech bezeichnet wird. Durch Ausnehmungen (Kühlmitteldurchführungen) in dem Prallkühlblech tritt ein Kühlmittel hindurch und trifft auf die dem Arbeitsmedium abgewandte Seite der Plattform. Hierdurch wird eine Kühlung der Plattform erreicht.

Aus der US-PS-4,642,024 geht eine kühlbare Statorgruppe für ein Gasturbinentriebwerk hervor. Die Statorgruppe weist eine äußere Luftabdichtung sowie einen stromaufwärtigen Halter und einen stromabwärtigen Halter auf. Die Halter stützen die äußere Luftabdichtung mit Hilfe von Verhakungen über einen Strömungsweg für ein heißes Arbeitsmedium ab. Dadurch ist eine konstruktive Dreiteilung der Luftabdichtung in einen stromabwärtigen und einen stromaufwärtigen Randbereich sowie einen zwischen den Randbereichen angeordneten Zentralbereich gegeben. Zur Kühlung der äußeren Luftabdichtung mit Kühlluft erfolgt zunächst eine Prallkühlung im Zentralbereich. Die Randbereiche, die aufgrund der Halter nicht direkt mit Kühlluft beaufschlagbar sind, werden gekühlt, indem ein Teil der gesammelten Kühlluft durch die Halter hindurchgeleitet wird, um eine Prallkühlung der Randbereiche zu ermöglichen. Dazu erstrecken sich Dosierlöcher durch die Halter, um die Kühlluft an den stromaufwärtigen und den stromabwärtigen Randbereich zur Prallkühlung der Randbereiche zu leiten.

Aus der US-PS-5,649,806 geht eine verbesserte Kühlanordnung für Führungsringe von Turbinenleitschaufeln in einer Gasturbine hervor. Ein Führungsring ist als Wandelement in einer Gasturbine zwischen den Plattformen zweier Turbinenleitschaufeln angeordnet. Die äußere Oberflache des Führungsrings ist dem Heißgas ausgesetzt und in radialer Richtung von den äußeren Enden der Turbinenlaufschaufeln durch einen Spalt beabstandet. Durch Kühlkanale innerhalb der dem Heißgas ausgesetzten Wand des Führungsrings wird eine Wärmeabfuhr durch konvektive Kühlung und durch Prallkühlung ermöglicht. Darüber hinaus weist der Führungsring zur äußeren Oberfläche hin speziell ausgestaltete Kühlluftschlitze auf. Diese sind so orientiert, daß die Kühlluft in Strömungsrichtung des Heißgases mit minimalem Impulsaustausch zwischen der Kühlluft und dem Heißgas an die äußere Oberfläche geführt wird. Dadurch wird eine Filmkühlung der dem heißen Gas ausgesetzten Oberfläche bewirkt.

Aus der EP 0 624 757 A1 geht eine Prallkühlrichtung für eine Flugtriebwerkskomponente, beispielsweise ein Verdichterteil eines Flugtriebwerks hervor. Die Prallkühleinrichtung umfaßt ein Wellblech mit einer Vielzahl von parallel zu einer Vorzugsachse sich erstreckenden Wellenbergen und dazu benachbarten Wellentälern, die jeweils eine trapezförmige Kontur aufweisen. Die Wellentäler sind dabei mit Prallkühlbohrungen versehen. Durch die Wellentäler und die Wellenberge sind Kühlkanäle gebildet, die sich parallel zu der Vorzugsachse erstrecken und in Strömungsverbindung mit dem Verdichterteil stehen. Senkrecht zu der Vorzugsachse sind stegförmige Verteilerbleche angeordnet, wobei die Verteilerbleche jeweils mit ihrer Oberkante mit dem gelochten Wellblech und mit ihrer Unterkante mit dem Verdichteraustrittsrohr verbunden sind. Durch die Verteilerbleche wird die Luft nach einer Prallkühlung des Verdichterrohrs zunächst senkrecht zur Vorzugsachse geleitet und danach auf die Kühlkanäle verteilt. Eine Rückkopplung oder Durchmischung von bereits abgeleiteter Luft mit der zur Prallkühlung zugeführten Luft soll hierdurch ebenso verhindert werden.

Eine Prallkühleinrichtung mit einem gelochten, trapezförmig ausgestalteten, uniaxialen Wellblech ist, ähnlich wie in der EP 0 624 757 A1, in der US 5,467,815 beschrieben. Hierbei ist das Prallkühlblech gegenüber einer zu kühlenden Wand einer Brennkammer beabstandet angeordnet. Nach einer Prallkühlung der Wand mittels Kühlluft gelangt die Luft in Bereiche der Wellenberge mit vergrößertem Strömungsquerschnitt, wo die Luft entlang der Achse weitergeleitet wird. Eine Beeinflussung von Prallkühlluft aus voneinander benachbarten Prallkühllöchern wird hierdurch nicht unterbunden, da ein ungehindertes Überströmen möglich ist.

Aufgabe der Erfindung ist es, eine verbesserte Einrichtung für ein zu kühlendes Bauteil, mit einem mit einem Kühlmittel beaufschlagbaren Prallkühlblech anzugeben. Die Einrichtung soll insbesondere eine verbesserte Prallkühlung für das zu kühlende Bauteil herbeiführen sowie einen effizienteren Kühlmitteleinsatz ermöglichen.

Erfindungsgemäß wird diese Aufgabe gelöst durch eine Einrichtung für ein zu kühlendes Bauteil, mit einem mit einem Kühlmittel beaufschlagbaren Prallkühlblech mit einer Kühlmitteldurchführung, wobei das Prallkühlblech vor dem zu kühlenden Bauteil angeordnet ist, wobei zwischen dem Prallkühlblech und dem zu kühlenden Bauteil neben der Kühlmitteldurchführung ein Ableitkanal für das Kühlmittel vorgesehen ist, und wobei das Prallkühlblech eine weitere Kühlmitteldurchführung aufweist, wobei zwischen der Kühlmitteldurchführung und der weiteren Kühlmitteldurchführung der Ableitkanal eine Strömungsbarriere für das Kühlmittel aufweist.

Beim Prallkühlen wird üblicherweise ein Kühlmittel durch eine Vielzahl von Kühlmitteldurchführungen in einer Platte oder in einem Blech (Prallkühlblech) geleitet, die der zu kühlenden Oberfläche des zu kühlenden Bauteils benachbart ist. Infolgedessen prallt das Kühlmittel in einer entsprechenden Vielzahl von Kühlmittelstrahlen im wesentlichen senkrecht auf die zu kühlende Oberfläche. Bei der Wechselwirkung mit der zu kühlenden Oberfläche nimmt das Kühlmittel Warme auf, die infolge eines Wärmeübergangs von dem thermisch belasteten Bauteil auf das Kühlmittel übertragen wird. Infolge dieser Wechselwirkung erwärmt sich das Kühlmittel. Die Kühleffizienz bei der Prallkühlung ist höher als z. B. bei einer herkömmlichen Konvektionskühlung, bei der das Kühlmittel im wesentlichen parallel zu der zu kühlenden Oberfläche des Bauteils geführt wird. Mit der Prallkühlung ist eine wirksame Kühlung des Bauteils erreicht. Das Bauteil kann dadurch höheren Temperaturen ausgesetzt werden, da bei gleichem Wärmeeintrag in das Bauteil das Bauteil gegenüber anderen Kühlmethoden auf einer niedrigeren Materialtemperatur gehalten werden kann.

Die Erfindung geht von dem Befund aus, daß bei den herkömmlichen Kuhlkonzepten, die mittels Prallkühlung ein Bauteil, welches eine zu kühlende Oberfläche aufweist, prallkühlen, sich unter dem Prallkuhlblech zwischen diesem und dem zu kühlenden Bauteil entlang der zu kühlenden Oberfläche weitgehende Bereiche ergeben, in denen hohe Strömungsgeschwindigkeiten des Kühlmittels vorhanden sind. Die Kühlmittelströmung erfolgt hierbei im wesentlichen senkrecht zu den Kühlmittelstrahlen, die aus Kühlmitteldurchführungen im Prallkühlblech in einer Richtung gegen die zu kühlende Oberfläche des Bauteils düsenförmig expandieren. Es zeigt sich, daß durch die transversale Umstromung der Kühlmittelstrahlen diese in ihrem Düsenstrahlcharakter empfindlich gestört sind, insbesondere in der unmittelbaren Nähe der zu kühlenden Oberfläche des Bauteils, wo dieser Effekt sich besonders nachteilig auswirkt. Die transversale Strömung führt in der Wechselwirkung mit einem Kühlmittelstrahl zu Verwirbelungen, die die mittlere Temperatur des Kühlmittels im Kühlmittelstrahl herabsetzen. Gegenuber dem Fall ohne eine störende Transversalstromung ergibt sich eine reduzierte Kühleffizienz.

Mit der Erfindung wird ein Weg aufgezeigt, die Transversalströmung entlang einer prallgekuhlten Oberfläche eines Bauteils im Bereich der Düsenexpansion eines Kühlmittelstrahls deutlich herabzusetzen. Die Einrichtung sieht hierfür einen Ableitkanal vor, der das Kühlmittel nach einer erfolgten Prallkühlung des Bauteils aldeitet. Der Ableitkanal weist zwischen der Kühlmitteldurchführung und einer weiteren Kühlmitteldurchführung eine Strömungsbarriere auf. Dadurch wird die Transversalströmung im Bereich der Kühlmittelstrahlen erheblich reduziert. Der Ableitkanal ist neben der Kühlmitteldurchführung vorgesehen, so daß das Kühlmittel nach einer Prallkühlung des Bauteils unmittelbar in den Ableitkanal gelangt. Die Strömung des Kühlmittels wird somit kanalisiert, und die Prallkühlwirkung der Kühlmittelstrahlen, die aus den Kühlmitteldurchführungen in einer Richtung gegen die zu kühlende Oberfläche des Bauteils düsenförmig expandieren, wird infolge der verminderten Transversalströmung erhöht. Durch die Strömungsbarriere gemäß der Erfindung ist zwischen der Kuhlmitteldurchführung und einer weiteren Kühlmitteldurchführung ein Bereich mit erheblich vermindertem Strömungsquerschnitt für das Kühlmittel bereitgestellt. Vorteilhafterweise kann die Strömungsbarriere des Ableitkanals so ausgestaltet sein, daß nahezu keine direkte Strömung von Kühlmittel mehr von der Kühlmitteldurchführung zu der weiteren Kühlmitteldurchführung möglich ist. Hierdurch ist eine gegenseitige Beeinflussung von Kühlmittelstrahlen, die aus der Kühlmitteldurchführung der weiteren Kühlmitteldurchführung düsenstrahlförmig zur Prallkühlung des Bauteils expandieren, weitgehend reduziert. Eine Prallkühleffizierung nachteilig beeinflussende Transversalströmung kann sich nicht aufbauen. Eine praktisch ungestörte Düsenstrahlexpansion ist gewährleistet.

Von großem Vorteil ist, daß durch die Kanalisierung der Kühlmittelströmung im Ableitkanal eine gezielte Weiterverwendung des Kühlmittels ermöglicht wird. Der Ableitkanal dient dabei einerseits als Sammelkanal für das Kühlmittel und andererseits als Strömungskanal. Nach erfolgter Nutzung des Kühlmittels zur Prallkuhlung des Bauteils kann das Kuhlmittel mittels des Ableitkanals zwischen dem Prallkühlblech und dem zu kuhlenden Bauteil 1 zu einem gewünschten Bereich weitergeleitet werden und für weitere Kühlzwecke verwendet werden. Beispielsweise kann der Ableitkanal so ausgestaltet sein, dass dieser das Kühlmittel entlang des Bauteils, insbesondere entlang der Oberfläche des Bauteils, leitet, wodurch eine konvektive Kühlung erzielt wird. Weiterhin kann das Kühlmittel durch den Ableitkanal zu anderen Bereichen desselben Bauteils geleitet werden, um dort für weitere Kühlzwecke verwendet zu werden. Ferner ist es mit Hilfe des Ableitkanals möglich, das Kühlmittel zu einem weiteren Bauteil zu leiten, um es dort zur Kühlung des weiteren Bauteils zu verwenden. Als ausnutzbare Kühlmechanismen kommen hierbei vor allem, neben einer weiteren Prallkühlung, eine konvektive Kühlung sowie eine Filmkühlung in Betracht. Die Einrichtung ermöglicht somit eine deutliche Effizienzsteigerung bei der Prallkühlung eines Bauteils sowie insbesondere eine gezielte Weiterverwendungsmöglichkeit des Kühlmittels nach der Prallkühlung.

Vorzugsweise ist eine weitere Kühlmitteldurchführung vorgesehen, die jenseits des Ableitkanals der Kühlmitteldurchführung gegenüberliegt. Durch die weitere Kühlmitteldurchführung steht eine weitere Möglichkeit der Prallkühlung des Bauteils zur Verfügung. Zugleich kann der Ableitkanal dadurch von zwei Seiten mit Kühlmittel gespeist werden. Die Einrichtung ist dadurch vorteilhafterweise so ausgestaltet, daß zumindest zwei Kühlmitteldurchführungen dem Ableitkanal zugeordnet sind. Es ist also nicht erforderlich, für jede Kühlmitteldurchführung eigens einen separaten Ableitkanal vorzusehen.

Vorzugsweise ist eine Mehrzahl von Kühlmitteldurchführungen parallel zu dem Ableitkanal angeordnet. Entlang des Ableitkanals sind somit mehrere Kühlmitteldurchführungen vorhanden und diesem zugeordnet. Das heißt, daß nach einer erfolgten Prallkühlung des Bauteils durch Kühlmittelstrahlen aus den Kühlmitteldurchführungen das Kühlmittel in den Ableitkanal gelangt. Der Ableitkanal wird hierbei von einer Mehrzahl von Kühlmitteldurchführungen mit Kühlmittel gespeist. Dies bedeutet eine sehr effiziente Nutzung des Ableitkanals. Infolgedessen wird in dem Ableitkanal eine entsprechende Menge an Kühlmittel gesammelt und abgeleitet.

In einer bevorzugten Ausgestaltung ist eine Mehrzahl von Ableitkanälen vorgesehen. Bei einer entsprechenden Anzahl und Anordnung von Kühlmitteldurchführungen in dem Prallkühlblech ist es vorteilhaft, mehrere Ableitkanäle zur Verfügung zu haben. Je nach Anzahl und Anordnung der Kühlmitteldurchführungen kann somit die Anzahl und Anordnung an Ableitkanäle gezielt und effizient angepaßt werden. Die Ableitkanäle werden dabei vorteilhafterweise großflächig entlang der mittels Prallkühlung zu kühlenden Oberfläche des Bauteils angeordnet. Durch die Mehrzahl von Ableitkanälen ist sichergestellt, daß das Kühlmittel aus einem Kühlmittelstrahl nach einer erfolgten Prallkühlung des Bauteils zumindest über einen Ableitkanal abgeleitet wird. Eine transversale Strömung, die die Effizienz der Prallkühlung nachteilig beeinflussen würde, wird somit im Bereich der gesamtem prallgekühlten Oberfläche des Bauteils weitgehend verhindert.

Bevorzugterweise erstrecken sich die Ableitkanäle entlang einer Längsachse. Die Längsachse bildet somit eine Vorzugsrichtung entlang derer sich die Ableitkanäle bevorzugt erstrekken. Mehrere Ableitkanäle können dabei vorteilhafterweise parallel entlang der Längsachse ausgebildet sein. Dadurch ist das Kühlmittel entlang dieser Längsachse gezielt weiterleitbar. In der Summe der Kühlmittelströme in den einzelnen Ableitkanälen kann somit eine ausreichende Menge an Kühlmittel in eine bevorzugte Richtung geleitet werden, ggf. zur Kühlung des Bauteils oder eines entlang der Längsachse an das Bauteil angrenzenden weiteren Bauteils. Dort kann das Kühlmittel dann für weitere Kühlzwecke eingesetzt werden.

In einer bevorzugten Ausgestaltung weist zwischen zwei benachbarten Kühlmitteldurchführungen der Ableitkanal eine Stromungsbarriere für Kühlmittel auf. Unter zwei benachbarten Kühlmitteldurchführungen werden dabei zwei Kühlmitteldurchführungen verstanden, die entlang des Ableitkanals aufeinanderfolgend angeordnet sind, wobei die Kühlmitteldurchführungen bezogen auf den Ableitkanal auf derselben Seite des Ableitkanals angeordnet sind.

Durch die Strömungsbarriere ist zwischen den benachbarten Kühlmitteldurchführungen ein Bereich mit deutlich vermindertem Strömungsquerschnitt hergestellt. Vorteilhafterweise wird die Strömungsbarriere so ausgestaltet, daß praktisch keine Strömung von Kühlmittel mehr von einer ersten Kühlmitteldurchführung zu einer zu der ersten Kühlmitteldurchführung benachbarten zweiten Kühlmitteldurchführung möglich ist. Dadurch ist eine gegenseitige Beeinflussung von Kühlmittelstrahlen, die aus den benachbarten Kühlmitteldurchführunger düsenförmig zur Prallkühlung des Bauteils expandieren, weitgehend reduziert. Insbesondere kann sich eine die Prallkühleffizienz nachteilig beeinflussende Transversalströmung praktisch nicht aufbauen. Vorteilhafterweise ist durch diese Ausgestaltung auch eine effizientere Speisung des Ableitkanals mit Kühlmittel erreicht.

Vorzugsweise ist der Ableitkanal von dem Prallkühlblech, insbesondere durch eine wellenförmige Verbiegung des Prallkühlblechs, gebildet. Der Ableitkanal ist dadurch Bestandteil des Prallkühlblechs. Vorteilhafterweise ist es somit nicht erforderlich, eine separate zusätzliche Komponente, die den Ableitkanal bildet, herzustellen und die Einrichtung damit auszurüsten. Herkömmliche Einrichtungen zur Prallkühlung können daher auf einfache Weise mit einem einen Ableitkanal bildenden Prallkühlblech ausgerüstet werden, um eine verbesserte Prallkühlung zu erzielen. Durch die Ausbildung des Ableitkanals von dem Prallkühlblech, kann ein konventionelles Prallkühlblech in einer Einrichtung für ein zu kühlendes Bauteil durch das Prallkühlblech mit dem Ableitkanal ausgetauscht werden. Die Kosten einer Umrüstung sind somit vernachlassigbar gegenüber den Vorteilen des neuen Kühlkonzepts.

Bevorzugt ist das Pralkühlblech einstückig. Das Prallkuhlblech ist durch diese Ausgestaltung in einfachst Welse und besonders kostengünstig herstellbar. Das Prallkühlblech kann z.B. aus einem Blechtafelrohling mit üblichen Herstellungsverfahren, beispielsweise durch Tiefziehen, gefertigt werden. Die Kühlmitteldurchführungen sowie die schlußendliche Formgebung kann z.B. durch Stanzen in einer Stanzmaschine erfolgen. Durch die einstückige Ausgestaltung ist der Ableitkanal mit der Strömungsbarriere fester Bestandteil des Prallkühlblechs. Von großem Vorteil ist, daß der Ableitkanal mit dem Prallkühlblech durch entsprechende Formgebung des Prallkühlblechs zusammen herstellbar ist. Der Ableitkanal kann beispielsweise durch wellenförmiges Verbiegen des Prallkühlblechs gefertigt werden. Schweiß- oder andere Verbindungen zwischen dem Prallkühlblech und dem Ableitkanal erübrigen sich somit. Die wellenförmige Verbiegung kann dabei entlang zweier Vorzugsachsen erfolgen, so daß in zwei Dimensionen eine reliefförmige Wellenstruktur mit Wellenbergen und Wellentälern gebildet ist. Ein derart ausgestaltetes Prallkühlblech weist eine hohe thermomechanische Elastizität auf und ist für Hochtemperaturanwendungen, insbesondere in einer Gasturbine, besonders geeignet. Das Prallkühlblech weist in dieser besonders bevorzugten Ausgestaltung eine für den Hochtemperatur-Anwendungsfall sehr vorteilhafte Verformungstoleranz in mehreren Dimensionen auf.

Bevorzugterweise ist das Prallkühlblech aus einem hochtemperaturfesten Material hergestellt. Als Material kommen insbesondere hochtemperaturfeste Stähle oder Legierungen auf Nickel-, Eisen- oder Chrombasis in Frage. Vorteilhafterweise ist dadurch das Prallkühlblech mit dem Ableitkanal für Hochtemperaturanwendungen, d. h. zur Kühlung thermisch hochbelasteter Bauteile, ausgestaltet.

Bevorzugt ist das zu kühlende Bauteil eine hochtemperaturbelastete Komponente einer thermischen Maschine, insbesondere einer Gasturbine. Weiter bevorzugt ist das zu kühlende Bauteil eine Plattform einer Turbinenschaufel oder ein Hitzeschildelement einer Brennkammer einer Gasturbine. Als Turbinenschaufeln kommen dabei sowohl Turbinenleitschaufeln als auch Turbinenlaufschaufeln in Betracht. Weitere Anwendungen der Einrichtung, etwa zur Prallkühlung von Wandelementen in Öfen oder zur Kühlung von Kraft- und Arbeitsmaschinen, sind möglich.

Die Einrichtung für ein zu kühlendes Bauteil wird im folgenden anhand der in der Zeichnung dargestellten Ausführungsbeispiele näher erläutert. Es zeigen schematisch und vereinfacht:
- FIG 1: eine Gasturbine mit Verdichter, Brennkammer und Turbine,
- FIG 2: eine perspektivische Darstellung einer Turbinenleitschaufel mit Prallkühlblech,
- FIG 3: eine Ansicht eines Ausschnitts der in Figur 2 gezeigten Turbinenleitschaufel entlang der Schnittlinie III-III, und
- FIG 4: eine Ansicht eines Ausschnitts der in Figur 2 gezeigten Turbinenleitschaufel entlang der Schnittlinie IV-IV.

Gleiche Bezugszeichen haben in den Figuren die gleiche Bedeutung.

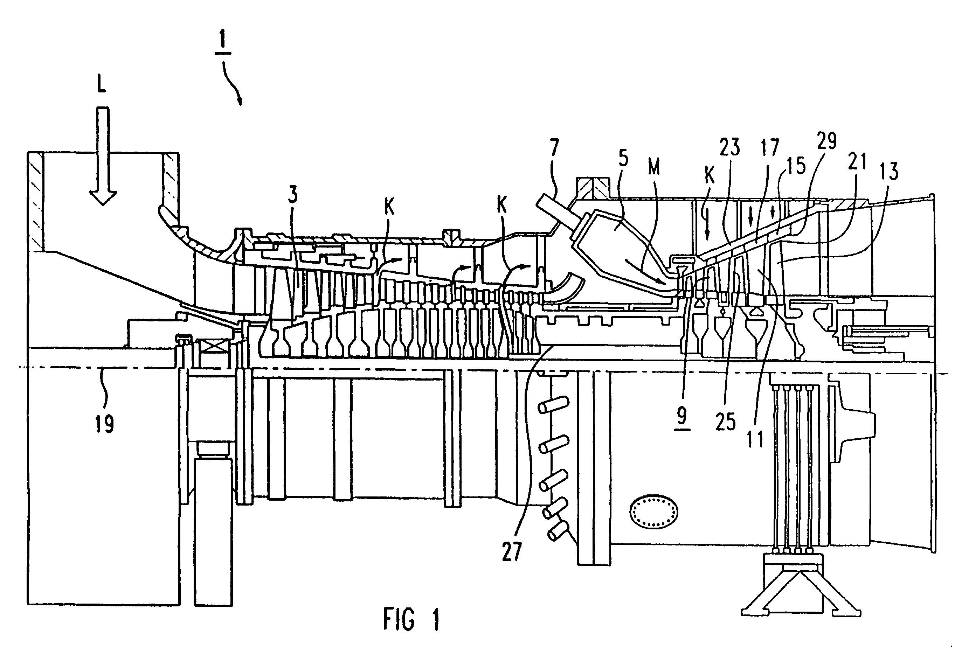

In Figur 1 ist ein Halbschnitt durch eine Gasturbine 1 dargestellt. Die Gasturbine 1 weist einen Verdichter 3 für Verbrennungsluft, eine Brennkammer 5 mit Brenner 7 für einen flüssigen oder gasförmigen Brennstoff sowie eine Turbine 9 zum Antrieb des Verdichters 3 und eines in Figur 1 nicht dargestellten Generators auf. In der Turbine 9 sind feststehende Leitschaufeln 11 und rotierbare Laufschaufeln 13 auf jeweiligen, sich radial erstreckenden, im Halbschnitt nicht gezeigten Kränzen entlang der Rotationsachse 19 der Gasturbine 1 angeordnet. Dabei wird ein entlang der Rotationsachse 19 aufeinanderfolgendes Paar aus einem Kranz von Leitschaufeln 11 (Leitschaufelkranz) und einem Kranz von Laufschaufeln 13 (Laufschaufelkranz) als Turbinenstufe bezeichnet. Jede Leitschaufel 11 weist eine Plattform 17 auf, welche zur Fixierung der betreffenden Leitschaufel 11 am inneren Turbinengehäuse 23 angeordnet ist. Die Plattform 17 stellt dabei ein Wandelement in der Turbine 9 dar. Die Plattform 17 ist ein thermisch stark belastetes Bauteil 17, welches die äußere Begrenzung für ein heißes Mediums M, insbesondere des Heißgaskanals 25, in der Turbine 9 bildet. Die Laufschaufel 13 ist auf dem entlang der Rotationsachse 19 der Gasturbine 1 angeordneten Turbinenläufer 27 befestigt. Ein Führungsring 15 ist als Wandelement in der Gasturbine 1 zwischen den Plattformen 17 zweier axial beabstandeter, benachbarter Leitschaufeln 11 angeordnet. Der Führungsring 15 sowie die Plattform 17 der Leitschaufel 11 weisen jeweils eine Heißseite 29 auf, die im Betrieb der Gasturbine 1 dem heißen Medium M, insbesondere dem Heißgas M, ausgesetzt ist. Die Heißseite 29 des Führungsrings 15 ist dabei in radialer Richtung vom äußeren Ende 21 der Laufschaufel 13 durch einen Spalt beabstandet. Die Plattform 17 der Leitschaufel 11 und der axial an die Plattform 17 angrenzende Führungsring stellen jeweils kühlbare Bauteile 17 dar, die zur Kühlung mit einem Kühlmittel K beaufschlagt werden.

Im Betrieb der Gasturbine 1 wird Frischluft L aus der Umgebung angesaugt. Die Luft L wird im Verdichter 3 verdichtet und dadurch gleichzeitig vorgewärmt. In der Brennkammer 5 wird die Luft L mit dem flüssigen oder gasförmigem Brennstoff zusammengebracht und verbrannt. Ein zuvor dem Verdichter 3 aus geeigneten Entnahmen entnommener Teil der Luft L dient als Kühlluft K zur Kühlung der Turbinenstufen, wobei z.B. die erste Turbinenstufe mit einer Turbineneintrittstemperatur von etwa 750°C bis 1200°C beaufschlagt wird. In der Turbine 9 erfolgt eine Entspannung und Abkühlung des heißen Mediums M, insbesondere des Heißgases M, welches durch die Turbinenstufen strömt. Das zu kühlende Bauteil 17, insbesondere die Plattform 17 der Leitschaufel 11, wird zur Kühlung mit einem Kühlmittel K, insbesondere mit der Kühlluft K, von der der Heißseite 29 der Plattform 17 gegenüberliegenden Seite der Plattform 17 beaufschlagt. Dabei wird die Plattform 17 mittels Prallkühlung gekühlt.

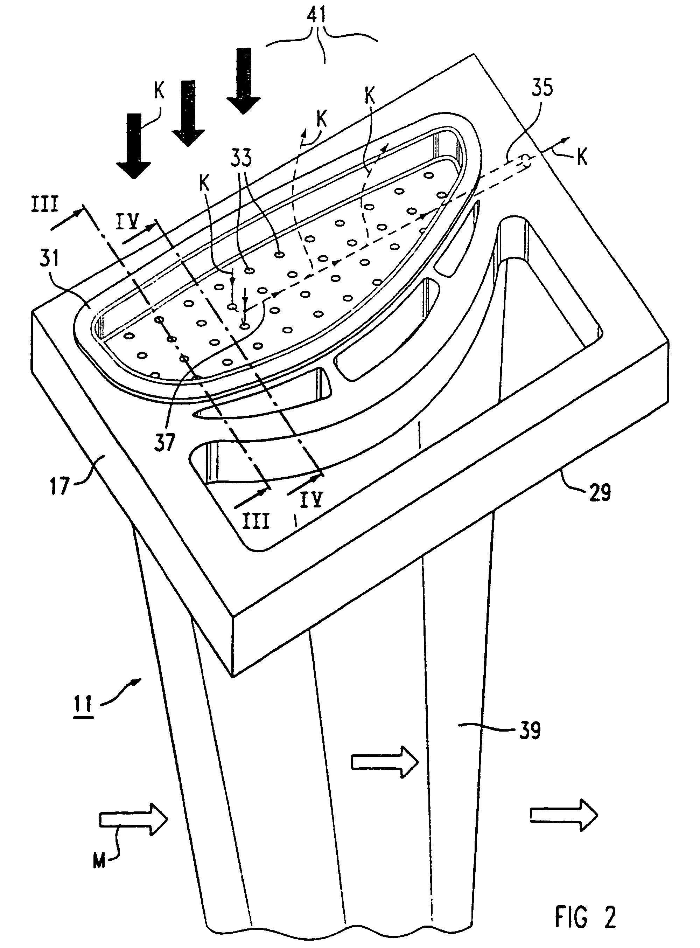

Figur 2 zeigt eine perspektivische Darstellung einer Turbinenleitschaufel 11. Die Turbinenleitschaufel 11 weist eine Plattform 17 sowie ein mit der Plattform 17 verbundenes Schaufelblatt 39 auf. Die Plattform 17 besitzt eine Heißseite 29, die im Betrieb der Gasturbine 1 mit einem heißen Medium M beaufschlagt ist. Die Plattform 17 ist ein thermisch hochbelastetes Bauteil 17, welches mittels Prallkühlung gekühlt wird. Auf der der Heißseite 29 gegenüberliegenden Seite der Plattform 17 ist ein wannenförmiges Prallkühlblech 31 angeordnet. Das Prallkühlblech 31 weist eine Zuströmseite 41 auf. Von der Zuströmseite 41 her ist das Prallkühlblech 31 zur Prallkühlung der Plattform 17 mit einem Kühlmittel K beaufschlagbar. Dies ist durch dicke Pfeile gekennzeichnet. In Strömungsrichtung des Kühlmittels K ist das Prallkühlblech 31 vor der zu kühlenden Plattform 17 angeordnet. Das Prallkühlblech 31 weist eine lochförmige Kühlmitteldurchführung 33 auf, wobei die Kühlmitteldurchführung 33 eine von mehreren Kühlmitteldurchführungen 33 darstellt. Zwischen dem Prallkühlblech 31 und dem zu kühlenden Bauteil 17, insbesondere der Plattform 17, ist neben der Kühlmitteldurchführung 33 ein Ableitkanal 37 für das Kühlmittel K vorgesehen. Der Ableitkanal 37 dient der Ableitung des Kühlmittels K nach erfolgter Prallkühlung der Plattform 17.

Bei der Prallkühlung wird das Prallkühlblech 31 auf der Zuströmseite 41 mit dem Kühlmittel K unter hohem Druck beaufschlagt. Das Kühlmittel K strömt durch die Kühlmitteldurchführungen 33 und bildet entsprechend der Anzahl und Anordnung der Kühlmitteldurchführungen 33 eine Vielzahl von Kühlmittelstrahlen auf der der Zuströmseite 41 abgewandten Seite des Prallkühlblechs 31. Diese Kühlmittelstrahlen prallen auf die Plattform 17, wobei das Kühlmittel K Wärme aus der Plattform 17 aufnimmt, die infolge der Wärmeleitung von der mit dem heißen Medium M beaufschlagten Heißseite 29 zu der der Heißseite 29 gegenüberliegenden Seite der Plattform 17 geleitet wird. Infolge der Prallkühlung durch das Kühlmittel K wird das Kühlmittel K erwärmt, wobei sich die Temperatur des Kühlmittels K entsprechend erhöht. Nach der Prallkühlung wird das Kühlmittel K durch den Ableitkanal 37 abgeleitet. Je nach Anordnung und Ausgestaltung des Ableitkanals 37 wird das Kühlmittel K gezielt in unterschiedliche Bereiche der Plattform 17 weitergeleitet. Das Kühlmittel K wird dabei vorzugsweise für eine weitere Kühlung der Plattform 17 oder eines weiteren, an die Plattform 17 angrenzenden und in der Figur 2 nicht gezeigten Bauteils verwendet. Dabei kommen als Kühlmechanismen neben der Prallkühlung auch die konvektive Kühlung oder die Filmkühlung in Frage. Zur Kühlung eines an die Plattform 17 angrenzenden weiteren Bauteils, etwa einer weiteren an die Plattform 17 angrenzenden Plattform 17 einer Turbinenleitschaufel 11, wird das Kühlmittel K durch einen geeigneten Durchtrittskanal 35 in der Plattform 17 geführt. Das Kühlmittel K strömt durch den Durchtrittskanal 35 zu dem weiteren Bauteil zur Kühlung desselben. Der Durchtrittskanal 35 ist dabei beispielsweise eine einfache Bohrung in der Plattform 17.

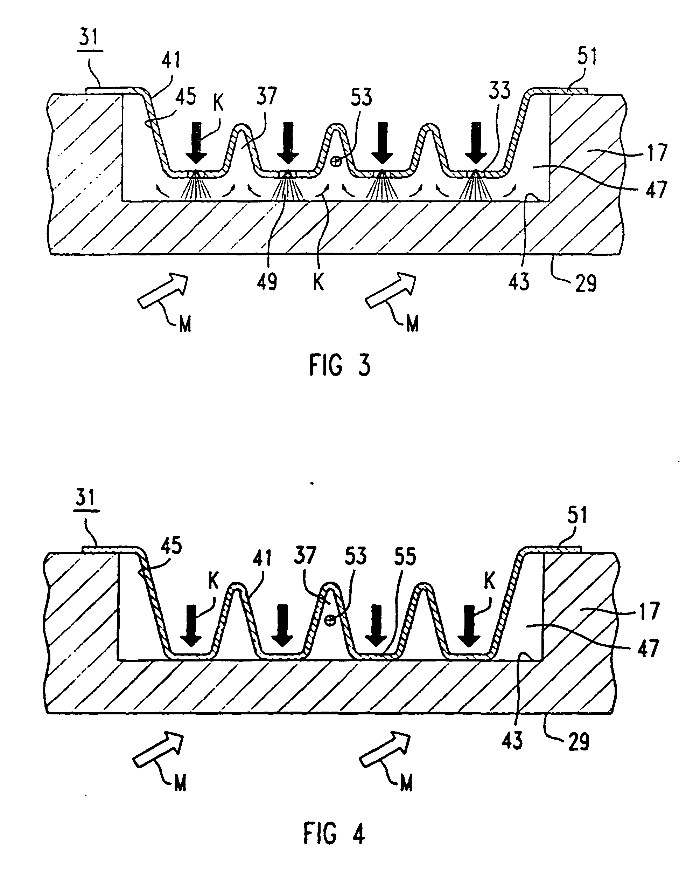

Figur 3 zeigt eine Ansicht eines Ausschnitts der in Figur 2 gezeigten Turbinenleitschaufel 11 entlang der Schnittlinie III-III. Das Prallkühlblech 31 umfaßt eine wellenförmige Wand 51 mit einer von dem Kühlmittel K beaufschlagbaren Zuströmseite 41 und einer der Zuströmseite 41 gegenüberliegenden Abströmseite 45. An die Abströmseite 45 schließt sich ein Kühlbereich 47 an, der zwischen der zu kühlenden Kühloberfläche 43 des Bauteils 17 und der Abströmseite 4b gebildet ist. Die Wand 51 weist mehrere die Wand 51 durchdringende Kühlmitteldurchführungen 33 auf. An die Kühlmitteldurchführung 33 schließt sich im Kühlbereich 47 ein Düsenexpansionsbereich 49 an.

In dem Kühlbereich 47 ist entlang der Wand 51 ein Ableitkanal 37 für Kühlmittel K gebildet. Der Ableitkanal 37 ist neben der Kühlmitteldurchführung 33 angeordnet. Dabei ist der Ableitkanal 37 einer von mehreren Ableitkanälen 37, und die Kühlmitteldurchführung 33 ist eine von mehreren Kühlmitteldurchführungen 33. Der Ableitkanal 37 ist von dem Prallkühlblech 31 gebildet und erstreckt sich parallel zu einer Längsachse 53.

Das Prallkühlblech 31 ist mit dem Ableitkanal 37 einstückig hergestellt. Das Prallkühlblech 31 ist so angeordnet, daß die Abstromseite 45 des Prallkühlblechs 31 der Kühloberfläche 43 der Plattform 17 gegenüberliegt.

Im Betrieb der in der Figur 3 nicht näher gezeigten Gasturbine 1 (vergleiche Figur 1) wird die Heißseite 29 der Plattform 17 mit dem heißen Medium M, insbesondere dem Heißgas M, beaufschlagt. Um den hohen Temperaturen standzuhalten, muß die Plattform 17 gekühlt werden. Bei Prallkühlung der Plattform 17 wird die Zustromseite 41 des Prallkühlblechs 31 mit dem Kühlmittel K unter geeignetem Druck beaufschlagt. Das Kühlmittel K gelangt von der Zuströmseite 41 durch die Kühlmitteldurchführungen 33 jeweils in den Düsenexpansionsbereich 49. Das Kühlmittel K expandiert im Düsenexpansionsbereich 49 düsenstrahlförmig in Richtung der zu kühlenden Plattform 17 und prallt in einer Mehrzahl von Kühlmittelstrahlen gegen die Kühloberfläche 43. Hierbei wird die Plattform 17 an der Kühloberfläche 43 effizient prallgekühlt. Das Kühlmittel K nimmt infolge der Wechselwirkung mit der Kuhloberfläche 43 Wärme auf, die infolge der Wärmeleitung von der Heißseite 29 zu der der Heißseite 29 gegenüberliegenden Kühloberfläche 43 transportiert wird. Infolge der Prallkühlung erwärmt sich das Kühlmittel K. Das Kühlmittel K gelangt nach Prallkühlung der Plattform 17 von dem Düsenexpansionsbereich 49 in einen Ableitkanal 37. Im Ableitkanal 37 wird das Kühlmittel K gesammelt; es und steht für weitere Kühlzwecke zur Verfügung. Beispielsweise kann das Kühlmittel K parallel zu der Längsachse 53 abgeleitet und gegebenenfalls zur Kühlung der Plattform 17 in einem anderen Bereich und/oder zur Kühlung eines weiteren Bauteils, welches in der Figur 3 nicht näher dargestellt ist und welches an die Plattform 17 angrenzt, verwendet werden. Das weitere Bauteil kann beispielsweise eine Plattform 17 einer weiteren Turbinenleitschaufel 11 oder ein Führungsring 15 sein (vergleiche Figur 1). Als Kühlmechanismen, die dabei ausgenutzt werden können, kommen neben einer weiteren Prallkühlung die konvektive Kühlung sowie die Filmkühlung in Frage. Durch die Mehrzahl von Ableitkanälen 37 ist gewährleistet, daß das Kühlmittel K aus dem Düsenexpansionsbereich 49 nach erfolgter Prallkühlung der Plattform 17 zumindest über einen der Ableitkanäle 37 abgeleitet wird. Eine zu den Kühlmittelstrahlen transversale Strömung entlang der Kühloberfläche 43, die die Effizienz der Prallkühlung nachteilig beeinflussen würde, kann somit im Düsenexpansionsbereich 49 weitgehend reduziert werden.

In Figur 4 ist eine Ansicht eines Ausschnitts der in Figur 2 gezeigten Turbinenleitschaufel 11 entlang der Schnittlinie IV-IV dargestellt. Die Schnittlinie IV-IV ist dabei entlang der Längsachse 53 der Schnittline III-III (vergleiche Figur 3) axial nachgeordnet. Die Schnittlinie IV-IV bildet dabei eine Querachse, die sich im wesentlichen senkrecht zur Längsachse 53 erstreckt, und entlang derer keine Kühlmitteldurchführung 33 angeordnet ist. Der Ableitkanal 37 weist eine Strömungsbarriere 55 auf. Dabei ist der Ableitkanal 37 mit der Strömungsbarriere 55 von dem Prallkühlblech 31 gebildet. Die Strömungsbarriere 55 ist so ausgestaltet, daß die Abströmseite 45 des Prallkühlblechs 31 mit der Kühloberfläche 43 der Plattform 17 in Kontakt ist. Dadurch ist zwischen zwei entlang der Längsachse 53 benachbarten Kuhlmitteldurchführungen 33 die Stromungsbarrieren 55 fur Kühlmittel K gebildet.

Unter zwei benachbarten Kühlmitteldurchführungen 33 werden dabei zwei Kühlmitteldurchführungen 33 verstanden, die entlang des Ableitkanals 37 aufeinanderfolgend angeordnet sind. Die Strömungsbarriere 55 dichtet die den benachbarten Kühlmitteldurchführungen 33 jeweils zugeordneten Düsenexpansionsbereiche 49 gegeneinander ab. Damit wird ein Überströmen von Kühlmittel K von einem Düsenexpansionsbereich 49 zu einem entlang der Längsachse 53 benachbarten weiteren Düsenexpansionsbereich 49 verhindert. Je dichter die Strömungsbarriere 55 abdichtet, desto besser wird eine mögliche störende Transversalströmung reduziert. Eine die Prallkühleffizienz nachteilig beeinflussende Transversalströmung kann sich bei entsprechend großer Dichtwirkung der Strömungsbarriere 55 praktisch nicht aufbauen. Von großem Vorteil 1 ist, daß durch diese Ausgestaltung auch eine besonders effiziente Speisung des Ableitkanals 37 mit Kühlmittel K gewahrleistet ist.

Die Erfindung zeichnet sich dadurch aus, daß für ein zu kühlendes Bauteil eine deutlich verbesserte Prallkühlung sowie ein gegenüber herkommlichen Prallkühlanordnungen effizienterer Kühlmitteleinsatz ermöglicht wird. Das Prallkühlblech wird in geeigneter Weise ausgestaltet, so daß im Kühlbereich, welcher zwischen dem Prallkühlblech und dem zu kühlenden Bauteil gebildet ist, eine transversale Strömung, insbesondere im Dusenexpansionsbereich der Kühlmittelstrahlen, weitgehend verhindert wird. Im Vergleich mit konventionellen Einrichtungen zur Prallkühlung kann mit dem angegebenen Kühlkonzept das Bauteil mit geringerem Kühlmitteleinsatz auf einer vorgegebenen Materialtemperatur gehalten werden. Diese Effizienzsteigerung ist mit einer Steigerung des Wirkungsgrades beim Einsatz der Einrichtung in einer thermischen Maschine verbunden.

## Patentansprüche

1. Einrichtung für ein zu kühlendes Bauteil (17), mit einem mit einem Kühlmittel (K) beaufschlagbaren Prallkühlblech (31) mit mindestens einer Kühlmitteldurchführung (33), wobei das Prallkühlblech (31) vor dem zu kühlenden Bauteil (17) angeordnet ist, und wobei zwischen dem Prallkühlblech (31) und dem zu kühlenden Bauteil (17) neben der Kühlmitteldurchführung (33) ein Ableitkanal (37) für das Kühlmittel (K) vorgesehen ist, und wobei das Prallkühlblech (31) eine weitere Kühlmitteldurchführung (33) aufweist, die benachbart zu der Kühlmitteldurchführung (33) angeordnet ist, **dadurch gekennzeichnet, dass** jeweils zwischen einer Kühlmitteldurchführung(33) und einer weiteren Kühlmitteldurchführung (33) der Ableitkanal (37) eine Strömungsbarriere (55) für das Kühlmittel (K) aufweist, so dass keine direkte Strömung von Kühlmittel (K) von der Kühlmitteldurchftihrung (33) zu der weiteren Kühlmitteldurchführung (33) möglich ist.

2. Einrichtung nach Anspruch 1,
**dadurch gekennzeichnet, daß** mindestens eine weitere Kühlmitteldurchführung (33) vorgesehen ist, die jenseits des Ableitkanals (37) der Kühlmitteldurchführung (33) gegenüberliegt.

3. Einrichtung nach Anspruch 1 oder 2,
**dadurch gekennzeichnet daß** eine Mehrzahl von Kühlmitteldurchführungen (33) parallel zu dem Ableitkanal (37) angeordnet ist.

4. Einrichtung nach Anspruch 1, 2 oder 3,
**dadurch gekennzeichnet, daß** eine Mehrzahl von Ableitkanälen (37) vorgesehen ist.

5. Einrichtung nach Anspruch 4,
**dadurch gekennzeichnet, daß** die Ableitkanäle (37) sich entlang einer Langsachse (53) erstrekken.

6. Einrichtung nach Anspruch 3, 4 oder 5,
**dadurch gekennzeichnet, daß** zwischen zwei benachbarten Kühlmitteldurchführungen (33) der Ableitkanal (37) eine Strömungsbarriere (55) für Kühlmittel (K) aufweist.

7. Einrichtung nach einem der vorhergehenden Ansprüche,
**dadurch gekennzeichnet, daß** der Ableitkanal (37) von dem Prallkühlblech (31), insbesondere durch eine wellenförmige Verbiegung des Prallkühlblechs (31), gebildet ist.

8. Einrichtung nach einem der vorhergehenden Ansprüche,
**dadurch gekennzeichnet, daß** das Prallkühlblech (31) einstückig ist.

9. Einrichtung nach einem der vorhergehenden Ansprüche,
**dadurch gekennzeichnet, daß** das Prallkühlblech (31) aus einem hochtemperaturfesten Material hergestellt ist.

10. Einrichtung nach einem der vorhergehenden Ansprüche,
**dadurch gekennzeichnet, daß** das zu kühlende Bauteil (17) eine hochtemperaturbelastete Komponente einer thermischen Maschine, insbesondere einer Gasturbine (1), bildet.

11. Einrichtung nach einem der vorhergehenden Ansprüche,
**dadurch gekennzeichnet, daß** das zu kühlende Bauteil (17) eine Plattform (17) einer Turbinenschaufel (11, 13) oder ein Hitzeschildelement in einer Brennkammer (5) einer Gasturbine (1) ist.

## Claims

1. Device for a component (17) to be cooled, with a baffle-cooling plate (31) capable of being acted upon by a coolant (K) and having at least one coolant leadthrough (33), the baffle-cooling plate (31) being arranged upstream of the component (17) to be cooled, and a diversion duct (37) for the coolant (K) being provided, next to the coolant leadthrough (33), between the baffle-cooling plate (31) and the component (17) to be cooled, and the baffle-cooling plate (31) having a further coolant leadthrough (33) which is arranged adjacently to the coolant leadthrough (33), **characterized in that** the diversion duct (37) has a flow barrier (55) for the coolant (K) in each case between a coolant leadthrough (33) and a further coolant leadthrough (33), so that a direct flow of coolant (K) from the coolant leadthrough (33) to the further coolant leadthrough (33) is not possible.

2. Device according to Claim 1, **characterized in that** at least one further coolant leadthrough (33) is provided, which is located opposite the coolant leadthrough (33) on the far side of the diversion duct (37).

3. Device according to Claim 1 or 2, **characterized in that** a plurality of coolant leadthroughs (33) are arranged parallel to the diversion duct (37).

4. Device according to Claim 1, 2 or 3, **characterized in that** a plurality of diversion ducts (37) are provided.

5. Device according to Claim 4, **characterized in that** the diversion ducts (37) extend along a longitudinal axis (53).

6. Device according to Claims 3, 4 or 5, **characterized in that** the diversion duct (37) has a flow barrier (55) for coolant (K) between two adjacent coolant leadthroughs (33).

7. Device according to one of the preceding claims, **characterized in that** the diversion duct (37) is formed by the baffle-cooling plate (31), in particular by a wavy bending of the baffle-cooling plate (31).

8. Device according to one of the preceding claims, **characterized in that** the baffle-cooling plate (31) is in one piece.

9. Device according to one of the preceding claims, **characterized in that** the baffle-cooling plate (31) is produced from a high-temperature-resistant material.

10. Device according to one of the preceding claims, **characterized in that** the component (17) to be cooled forms a component, subjected to high thermal load, of a thermal machine, in particular of a gas turbine (1).

11. Device according to one of the preceding claims, **characterized in that** the component (17) to be cooled is a platform (17) of a turbine blade (11, 13) or a heat-shield element in a combustion chamber (5) of a gas turbine (1).

## Revendications

1. Dispositif pour un élément (17) à refroidir, comprenant une tôle (31) de refroidissement par choc pouvant être alimentée par un fluide (K) de refroidissement et comprenant au moins un passage (33) pour du fluide de refroidissement, la tôle (31) de refroidissement par choc étant disposée devant l'élément (17) à refroidir et, entre la tôle (31) de refroidissement par choc et l'élément (17) à refroidir, est prévu, outre le passage (33) pour du fluide de refroidissement un canal (37) d'évacuation du fluide (K) de refroidissement et la tôle (31) de refroidissement par choc comportant un autre passage (33) pour du fluide de refroidissement, qui est disposé au voisinage du passage (33) pour le fluide de refroidissement, **caractérisé en ce que**, respectivement entre un passage (33) pour du fluide de refroidissement et un autre passage (33) pour du fluide de refroidissement, le canal (37) d'évacuation a une barrière (55) à l'écoulement du fluide (K) de refroidissement de sorte qu'un courant direct du fluide (K) de refroidissement ne peut pas aller du passage (33) pour le fluide de refroidissement à l'autre passage (33) pour le fluide de refroidissement.

2. Dispositif suivant la revendication 1, **caractérisé en ce qu'**il est prévu au moins un autre passage (33) pour du fluide de refroidissement, qui est opposé au passage (33) pour du fluide de refroidissement de l'autre côté du canal (37) d'évacuation.

3. Dispositif suivant la revendication 1 ou 2, **caractérisé en ce qu'**une multiplicité de passages (33) pour du fluide de refroidissement sont disposés parallèlement au canal (37) d'évacuation.

4. Dispositif suivant la revendication 1, 2 ou 3, **caractérisé en ce qu'**il est prévu une multiplicité de canaux (37) d'évacuation.

5. Dispositif suivant la revendication 4, **caractérisé en ce que** les canaux (37) d'évacuation s'étendent le long d'un axe (53) longitudinal.

6. Dispositif suivant la revendication 3, 4 ou 5, **caractérisé en ce qu'**entre deux passages (33) pour du fluide de refroidissement, qui sont voisins, le canal (37) d'évacuation comporte une barrière (55) à l'écoulement du fluide (K) de refroidissement.

7. Dispositif suivant l'une des revendications précédentes, **caractérisé en ce que** le canal (37) d'évacuation est formé par la tôle (31) de refroidissement par choc, notamment par une courbure ondulée de la tôle (31) de refroidissement par choc.

8. Dispositif suivant l'une des revendications précédentes, **caractérisé en ce que** la tôle (31) de refroidissement par choc est d'une seule pièce.

9. Dispositif suivant l'une des revendications précédentes, **caractérisé en ce que** la tôle (31) de refroidissement par choc est en un matériau réfractaire.

10. Dispositif suivant l'une des revendications précédentes, **caractérisé en ce que** l'élément (17) à refroidir forme un élément exposé à une température haute d'une machine thermique, notamment d'une turbine (1) à gaz.

11. Dispositif suivant l'une des revendications précédentes, **caractérisé en ce que** l'élément (17) à refroidir est une plateforme (17) d'une aube (11, 13) de turbine ou un élément formant bouclier thermique d'une chambre de combustion (5) d'une turbine (1) à gaz.
